# EUROPEAN PATENT APPLICATION

(11) **EP 1 755 074 A1**
(43) Date of publication of application: **21.02.2007**
(21) Application number: 06119046.8
(22) Date of filing: 16.08.2006
(51) Int. Cl.: G06K 19/08, G06K 7/00, G06K 19/07, H01L 27/15, G08C 23/04, G07C 9/00

(54) **Light authenticated RFID transponder**

(30) Priority: 15.08.2005 US 708532
(71) Applicant: Assa Abloy Identification Technology Group AB, 107 23 Stockholm (SE)
(72) Inventor: Davis, Michael L., Amhert, NY 14228 (US)
(74) Representative: Grosfillier, Philippe

(57) **Abstract**

The present invention is directed toward Radio Frequency Identification (RFID) devices (116) and related technologies. Specifically, an RFID device (116) is provided that includes a photon receiver (328). Photon signals (128) are received at the photon receiver (328) and analyzed before the RFID device begins interacting in Radio Frequency (RF) communications, thereby disclosing data stored on the RFID device to other devices (112).
The RFID transponder (116) is enabled by light emitted by a reading device (112) conforming the authenticity of the reading device (112)

## Description

This application claims benefit of United States Provisional Patent Application serial number 60/708,532, filed August 15, 2005, which is herein incorporated by this reference in its entirety.

### FIELD OF THE INVENTION

The present invention is generally directed to access control systems and radio frequency identification transponders. More specifically, the present invention provides a photon authenticated RFID transponder that is enabled by light emitted by a reading device confirming the authenticity of the reading device.

### BACKGROUND

A Radio Frequency (RF) communication interface between a reader and an RF Identification (RFID) device is typically automatically established when the RFID device is brought within an active zone of a reader/interrogator. The active zone of the reader is defined as a three dimensional space where the intensity of RF signals emitted by the reader exceeds a threshold of sensitivity of the RFID device and the intensity of RF signals emitted by the RFID device exceeds a threshold of sensitivity of the reader. When an RFID device is presented to most readers, such an interface is created and the reader and RFID device begin transmitting data back and forth. Typically, the RFID device is asked by the reader to supply some sort of credential data that verifies the authenticity of the RFID device, and its holder, to the reader. Typically, the RFID device assumes any entity that is asking for credential data must need it for the holder of the RFID device to gain access to a particular asset. Essentially, these RFID devices assume any reader is a trusted reader. Criminals have exploited this fact to steal data stored on the RFID device by creating an interface between the RFID device and an illicit reader. The RFID device assumes that the reader is a valid reader and readily transmits credential data to the reader.

Contactless RFID devices are rapidly displacing other machine-readable card-based technologies as the technology of choice due to their convenience. Unfortunately with this convenience comes a potential compromise to a cardholder's privacy. This can occur during the time when a card is presented to a reader since the RF signal can be surreptitiously intercepted and the data remotely retrieved from the card without the cardholder's knowledge. It can also occur while a card is being carried in a person's wallet or purse. Such attacks may include replay attacks, man-in-the-middle attacks, and other known RFID attacks. Security mechanisms such as mutual authentication, challenge/response, encryption of data, and even the use of secure communication channels attempt to minimize the risk of having data intercepted by an unscrupulous entity, but can never completely eliminate it.

Additionally, ISO-compliant contactless smart cards adhering to the ISO 14443A, 14443B, and 15693 specifications currently utilize a static unique User ID (UID) that can be read without the use of any security mechanisms. Even though the UID is randomly assigned to a user when the card is issued, there exists the possibility of associating this UID with a particular individual. Once this association is made, then this individual can be surreptitiously tracked by his/herUID using RFID technologies.

Further complicating the situation, there are proposals to integrate RFID devices into banknotes, credit cards, debit cards, store loyalty cards and other high-value objects in an attempt to prevent fraud. The thought is that a person carrying an object with all of the authentication information must be the true object owner. As more and more objects are equipped with these RFID devices, the chances of having one's personal information stolen from them increases. High-value objects integrated with RFID devices typically carry extremely sensitive information (e.g. social security numbers, addresses, bank account numbers, ATM pin codes, names, etc.) If this type of information is stolen, the entire identity of the object holder may be compromised. This poses a very serious threat to the general population carrying objects equipped with an RFID device.

There have been some attempts to mitigate the risks of having ones information stolen from their RFID device. For example, in GB Patent Application No. 2,410,151 to RF Tags Ltd., which is herein incorporated by this reference in its entirety, an RFID device is described that includes an electronic identification circuit coupled to an antenna. The RFID device further includes a photodiode or the like that ensures that the data from the RFID device can only be read when the RFID device is exposed to ambient light. This prevents data from being read from the RFID device when the tag is in a person's pocket, for example. The assumption is that the person only wants to have the data read when the RFID device is out of the person's pocket. A drawback to the proposed solution is that the person may have their RFID device out of their pocket and still may not want to have the data read. For example, the person may be carrying the RFID device in a purse that inadvertently exposes the RFID device to light, thereby allowing the data to be potentially read by an unauthorized entity. Essentially the data from the RFID device may be stolen any time the tag is exposed to light. Just because the RFID device is exposed to light does not mean that the holder of the RFID device wishes to have that data read.

Additionally, a person may be carrying an object that has several applications loaded on it. The person may present that object to a first reader only wanting it to have information related to the first reader accessed (e.g., the first application information). Unfortunately, once exposed to any type of light, the data related to other applications is exposed to potential data harvesters.

Another drawback to such a solution is that it relies primarily on ambient light to power components of the credential. Thus, the credential may not work unless an adequate amount of light energy is available to the credential. Therefore, the credential would be rendered useless at night and in other dark situations where an illumination source is not present near the reader.

### SUMMARY

The present invention is generally directed toward a method, apparatus, and system that utilizes a photon authenticated RFID transponder to substantially prohibit illicit data harvesting. As can be appreciated, an RFID device can be implemented as a part of an ID/access card, smart card, RF tag, cellular phone, Personal Digital Assistant (PDA), and the like.

In accordance with one embodiment of the present invention, a system is provided that substantially prevents the illegitimate harvesting of data from an RFID device. The data may have degrees of sensitivity. For example, highly sensitive data may include, but is not limited to, bank account numbers, social security numbers, PIN codes, passwords, keys, RFID unique ID, encryption schemes, etc. Less sensitive data may include, but is not limited to, user name, manufacturer ID, job title, and so on. Specifically, the system includes an authorized RFID reader that has a photon source and an RFID device that has a photon receiver. Light is emitted from the RFID device reader to the RFID device. The light received from the RFID device reader typically enables the RFID device. This ensures that the RFID device is only enabled when it is presented to a reader associated with an enabling photon source.

A photon is a quantum of light, or the smallest possible packet of light at a given wavelength. Photons travel at the speed of light and have mass and momentum dependent upon their frequencies. Thus, light, regardless of its wavelength, comprises photons. Accordingly, "photons" and "light" are used interchangeably herein, as can be appreciated by one of skill in the art. Enabling light can be emitted at various wavelengths including, black light and ultraviolet light (e.g., 10 nm ≤ λ ≤ 400 nm), visible light (e.g., 400 nm ≤ λ ≤ 700 nm), infrared light (e.g., 700 nm ≤ λ ≤ .01 cm).

In further embodiments of the present invention, the RFID device reader may encode the light emitted by its photon source. The encoded light is then received by the RFID device and decoded. Thereafter the RFID device can verify the authenticity of the RFID device reader before it allows data to be read from the RFID device reader. Again, this eliminates the possibility of the RFID device having data read from a potentially unauthorized reader. By having the RFID device verify the authenticity of the reader, the RFID device can be assured that a credible reader is reading its data.

In accordance with embodiments of the present invention, a method is provided that enables an RFID device to have its data read only when it receives proper photon radiation. The method includes receiving a photon signal at a photon receiver, processing the received signal to determine if the source of the photon signal is authorized to read data from the RFID device. If the source of the photon signal is determined to be authorized, the RFID device sends a signal back to the photon signal source, to initiate an authorization process. If the RFID device cannot determine that the source of the photon signal is authorized to receive data from the tag, then the RFID device does not allow its data to be read.

This method ensures that only authorized readers have access to the data stored on the RFID device. The presence of any type of light does not simply enable the RFID device. Instead, the RFID device is enabled only when presented with an enabling type of radiation. Enabling radiation may, for example, be dependent upon the characteristics of the radiation (e.g., wavelength, frequency, intensity, etc.), source of radiation, data contained within the radiation, or combinations thereof.

In accordance with further embodiments of the present invention, an RFID device having a photon-receiving unit is provided. The RFID device is characterized in that it does not freely emit data stored in its memory. The RFID device also has a photon authentication function stored in its memory. The RFID device receives a photon signal at the photon-receiving unit. The signal is sent to a controller of the RFID device. The controller uses the photon authentication function stored on the memory of the RFID device and verifies the identity of the source of the photon signal before it allows anything to read its data.

In accordance with embodiments of the present invention, the photon authentication function may include a lookup table of authorized readers and the identity of the reader may be sent to the RFID device through the photon signal. The controller may compare the identity of the source of the photon signal with a list of authorized readers in the lookup table to determine if the source of the photon signal is authorized to read data from the RFID device. The photon authentication function may also include a photon analyzer that determines characteristics of the radiation that was received and if those characteristics correspond to valid radiation characteristics. If the characteristics are valid and/or the reader is listed in the lookup table, then it can be assumed that the source of the radiation is an authorized source and the RFID device will allow the source of radiation to read data from its memory.

In accordance with one embodiment, an RF field generated by a reader generally powers a passive RFID device. Accordingly, a reader may continuously emit an RF field but the RFID device does not transmit data using RF until the photon authentication process is complete. For active RFID devices (i. e., those with a power source), the RFID device may not have to be powered by an external RF field. Thus, the active device may use RF or light to "wake up", still photon authentication should occur before any data is transmitted between the RFID device and the reader.

By requiring a photon authentication, known attacks such as the man-in-the-middle attack can be mitigated. This is because photon authentication generally requires a line of sight between a reader and RFID device. Since the man-in-the-middle attack generally relies on the actual RFID device not being within proximity of the reader, the RFID device will not release any useful information to the man-in-the-middle.

These and other advantages will be apparent from the disclosure of the invention(s) contained herein. The above-described embodiments and configurations are neither complete nor exhaustive. As will be appreciated, other embodiments of the invention are possible using, alone or in combination, one or more of the features set forth above or described in detail below.

### BRIEF DESCRIPTION OF THE DRAWINGS

Fig. 1 is a diagram depicting an exemplary system for authenticating RFID devices with authorized readers in accordance with embodiments of the present invention;
Fig. 2 is a block diagram depicting an exemplary RFID device reader in accordance with embodiments of the present invention;
Fig. 3 is a block diagram depicting an exemplary RFID device in accordance with embodiments of the present invention;
Fig. 4 is a flow chart depicting a method initiating an authentication routine from the perspective of a reader in accordance with embodiments of the present invention; and
Fig. 5 is a flow chart depicting a method of authorizing data to be read from an RFID in accordance with embodiments of the present invention.

### DETAILED DESCRIPTION

The present invention generally is a radio frequency identification (RFID) device, method, and system for authenticating RFID devices, such as ID/access cards, smart cards, RF tags, and the like. The invention advantageously addresses deficiencies of the prior art and may be utilized within the context of security systems, as well as be equally efficiently utilized in a broad range of other applications using interactive computerized data acquisition techniques, both contactless or requiring a physical contact with a carrier of pre-programmed information (e.g., monitoring moving objects, tracking inventory, verifying credit cards, and the like).

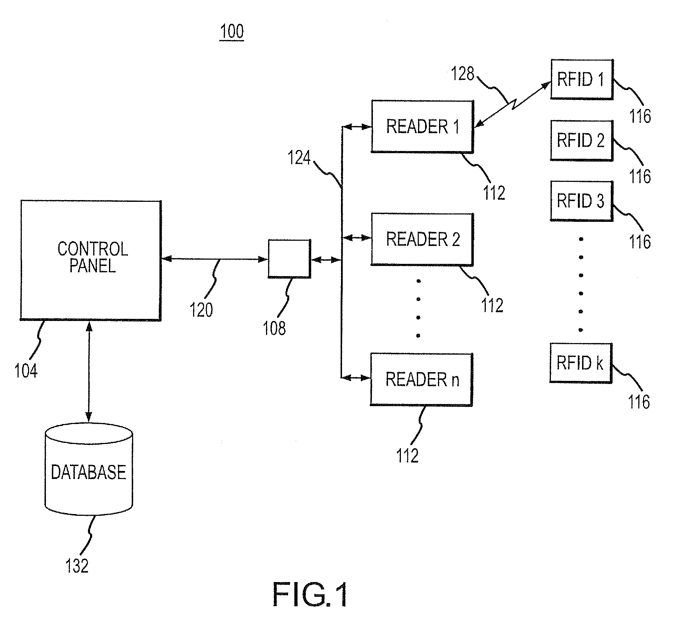

Fig. 1 depicts an access network 100 used to verify the identity of at least one RFID device. In one embodiment of the present invention, the system 100 comprises a control panel 104, a hub 108, a plurality of readers 112₁₋ₙ, and a plurality of RFID devices 116₁₋ₖ such that n and k are integers wherein n≥1, k≥1, and typically k is greater than n. The plurality of readers 112₁₋ₙ may include readers 112 of the same type, as well as readers of different types. For example, a subset of the plurality of readers 112₁₋ₙ may be legacy readers (e.g. readers using older transmission protocols). Whereas another subset of the plurality of readers 112₁₋ₙ may be new readers utilizing more secure protocols including the protocols described herein. In the depicted embodiment, the readers 112 are coupled to the control panel 104 via the interconnecting hub 108 through interfaces 120 and 124. In an alternate embodiment (not shown), the readers 112 may be directly coupled to the respective inputs/outputs of the control panel 104. Interfaces 120 and 124 between the readers 112, the hub 108, and the control panel 104 are generally bi-directional interfaces, which may selectively be implemented in a form of wired, wireless, fiber-optic communication links, or combinations thereof. Even though the interfaces 120 and 124 are depicted as bi-directional interfaces, one skilled in the art can appreciate that the interfaces 120 and 124 may be implemented with unidirectional interfaces that use a unidirectional communication protocol, for example, the Wiegand protocol.

As can be appreciated by one of skill in the art, the interfaces 120 and 124 may be implemented utilizing buses or other types of connections. For example, the I/O ports may be one or more of a USB port, parallel port, serial port, Small Computer Systems Interface (SCSI) port, modem, Ethernet, and/or an RF interface. The protocols used to communicate between the control panel 104 and the readers 112 may include one or more of the TCP/IP protocol, RS 232, RS 485, Current Loop, Power of Ethernet (POE), Bluetooth, Zigbee, GSM, WiFi, and other communication methods and protocols known in the art.

Interface 128 represents the communication interface that exists between a reader and an RFID device 116. Interface 128 may represent an RF communication interface and/or a photon communication interface. As will be described in detail below, generally an RFID device 116 may not establish, and/or transmit any data across, the interface 128 if it cannot verify the authenticity of the reader 112 that is attempting to communicate with it.

The control panel 104 may be a general-purpose computer adapted for multi-task data processing and suitable for use in a commercial setting. Alternatively, the control panel 104 may be implemented with a host computer and readers 112 can be connected to the host computer via a TCP/IP connection or other type of network connection. A memory of the control panel 104 comprises software program(s) containing a database of records for the system 100. Alternatively, a database 132 may be separated from the control panel 104 as depicted in Fig. 1. The database 132 whether integral to the control panel 104, separate from the control panel 104, or both, maintains records associated with the readers 112, RFID devices 116 and their respective holders or users, algorithm(s) for acquiring, decoding, verifying, and modifying data contained in the readers 112, algorithm(s) for testing authenticity and validity of the RFID devices 116, and algorithm(s) for implementing actions based on the results of these tests. Specific configurations of the control panel 104 are determined based on and compliant with computing and interfacing capabilities of the readers 112 and/or the hub 108.

As used herein, in reference to an individual or an object associated with an RFID device 116, the terms a "holder" and a "user" are used interchangeably.

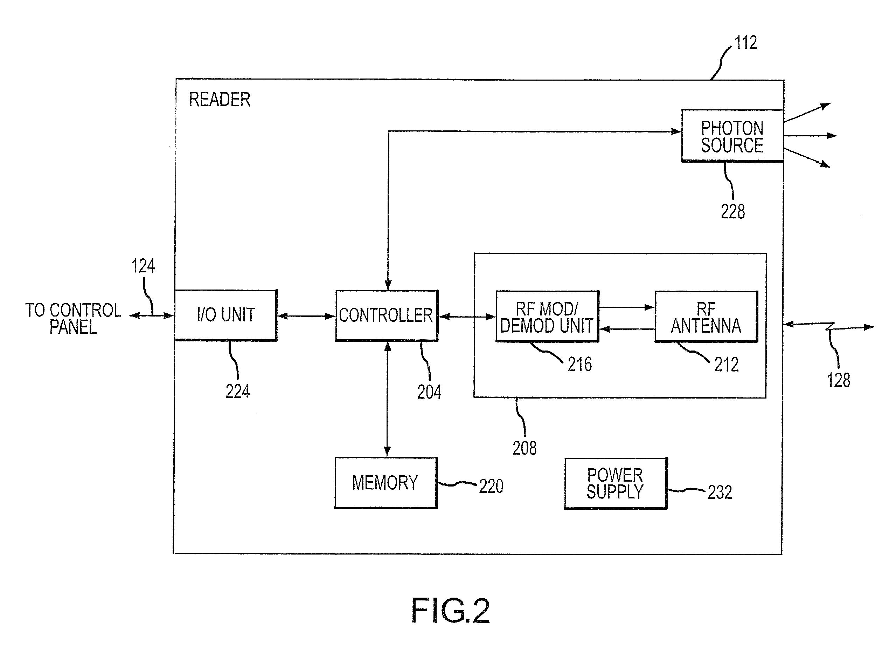

Referring now to Fig. 2, an exemplary reader 112 will be described in accordance with embodiments of the present invention. The reader 112 comprises a controller 204, an RF send/receive unit 208 including an RF antenna 212 and an RF Modulation/Demodulation Unit (MDU) 216, a memory 220, an input/output (I/O) Unit 224 to communicate with the control panel 104 via interface 124 (either directly or through the hub 108) and other external devices such as locks, door stripes, door monitor sensors, egress push buttons. The reader 112 may further comprise a photon source 228, and a power supply 232. Typically, a reader 112 is associated with a particular asset (*i.e.,* a door protecting access to a secure room, a computer lock protecting sensitive information or computer files, a lock on a safe, a bank account, a credit card, and the like). In one embodiment, upon verification of credential information stored on the RFID device 116, the reader 112 generates signals facilitating execution of the results of interrogating the RFID device 116 (e.g., engages/disengages a locking mechanism, allows/disallows movement of a monitored article, temporarily disables itself, activates an alarm system, provides access to a computer system, provides access to a particular document, authorize a purchase/withdrawal, and the like). If the credential information is not verified by the reader 112 or is determined to be fraudulent, nothing may happen, the RFID device may be rejected, and/or alarms may be triggered alerting security personnel. Alternatively, the control panel 104 may generate such signals.

The controller 204 (e.g., microprocessor, application specific integrated circuit (ASIC), or the like) uses bi-directional interfaces to communicate with the MDU 216, the memory 220, the I/O Unit 224, and/or the photon source 228. In an alternate embodiment (not shown), portions of the MDU 216 may be incorporated in the controller 204.

The memory 220 generally comprises software routines facilitating, in operation, pre-determined functionality of the reader 112. The memory 220 may be implemented using various types of electronic memory generally including at least one array of non-volatile memory cells (e.g., Erasable Programmable Read Only Memory (EPROM) cells or FLASH memory cells, etc.) The memory 220 may also include at least one array of dynamic random access memory (DRAM) cells. The content of the DRAM cells may be pre-programmed and write-protected thereafter, whereas other portions of the memory may selectively be modified or erased. Furthermore, the memory may comprise magnetic and/or optical memory in place of, or in combination with, the electronic memory described above. Typical types of magnetic and/or optical memory include, a hard drive, optical drive, tape drive, floppy disk, and the like.

In addition to being RFID readers (e.g. readers that verify authenticity of the RFID devices) the readers 112 may have additional functionality. The readers 112 may include a keypad or other user input devices for receipt of additional user known passwords, contact card identification devices, and biometric authentication devices including voice recognition, retina scanners, finger print analyzers, facial feature analyzers, and the like.

In one embodiment of the present invention, a reader 112 continuously creates an RF field with the RF Antenna 212. In another embodiment, the RF field may be run through a duty cycle in an attempt to conserve energy. When an RFID device 116 is presented to the reader 112 (e.g., placed within the active zone of the reader 112), the controller 204 will detect an increase in power consumption by the RFID device 116. The controller 204, in response to detecting the presence of an RFID device 116, sends a signal to the photon source 228 thereby enabling the photon source 228 to transmit a light message. The light message transmitted by the photon source 228 may have data encoded thereon or may simply be light from one or several parts of the electromagnetic spectrum (e.g., visible light, infrared light, black light, and/or ultraviolet light). The purpose of emitting light from the photon source 228 is so that the RFID device 116 can verify the authenticity of the reader 112 without engaging in RF communications. As can be appreciated, the photon source 228 may also act as a photon receiver if light communications between the reader 112 and the RFID device 116 is desired. The photon source 228 may include one or more photodiodes, light emitting diodes, laser diodes, phototransistors, photocells, modulators/demodulators, multiplexers, organic LEDs, incandescent lights, or any other type of light emitting/receiving devices. For example, in two Intel papers entitled "Introducing Intel's Advances in Silicon Photonics" published in February 2004 and "Continuous Silicon Laser White Paper" published in February 2005, each of which are herein incorporated by this reference, various silicon devices are discussed that can modulate data onto a continuous laser. Data may also be encoded on a light signal by pulsing the light signal in a determined fashion.

In accordance with another embodiment of the present invention, rather than waiting until an RFID device 116 is detected to transmit a photon signal, the reader 112 may periodically transmit photon signals from the photon source 228. Therefore, the reader 112 does not have to continuously transmit an RF signal. By periodically transmitting a photon signal, the reader 112 would only have to wait until it receives an RF signal from an RFID device 116 that received and verified the periodically transmitted photon signal. This may save on power consumption at the reader 112 if doing so requires less power from the power source 232 (e.g. battery, AC/DC converter, or the like) to intermittently send a photon signal rather than continuously sending an RF signal.

Once RF communications have been initiated, the controller 204 determines what type of credential data is necessary to allow the holder of the RFID device 116 to access the asset that the reader 112 is associated with. The controller 204 makes the determination by accessing the memory 220 where information about the asset and required credentials are stored. The controller 204 then sends a signal to the MDU 216 where the signal is modulated (e.g., by frequency, amplitude, pulse-width, phase, etc.) onto a carrier signal. The modulated signal is then sent to the RF Antenna 212 to be emitted to the RFID device 116 via interface 128.

In accordance with embodiments of the present invention, during the RF receiving mode, the RF Antenna 212 receives an RF signal. The signal is then sent to the MDU 216 where it is demodulated and forwarded to the controller 204. The controller 204 checks the data from the signal against data in the memory 220 to verify the authenticity of the RFID device 116 or sends the signal to the control panel 104 for verification of the same. The controller 204 may generate additional messages to be sent, via an RF signal and/or a photon signal, if it wishes to determine more information about the RFID device 116. However, if the controller 204 has properly verified (in the event that the control panel 104 did not perform the verification) the authenticity of the RFID device 116, then a signal is sent to the I/O Unit 224. The I/O Unit 224 then sends the signal to the control panel 104 to perform a task associated with verifying the authenticity of the RFID device 116. Alternatively, the reader 112 may facilitate execution of the results directly rather than forwarding these signals on to the control panel 104.

In accordance with further embodiments of the present invention, the photon source 228 may be separated from the reader 112. For example, a reader 112 may use a photon source 228 to generate a photon signal, however, the photon source 228 is not integral to the reader 112. The photon source 228 and reader 112 may be in wired or wireless communication with each other. By having the photon source 228 separated from the reader 112, the photon source 228 may be used by more than one reader 112. The photon source 228 may be a stand-alone device, or may be implemented as a part of another device. Specifically, one reader among a set of readers may comprise a photon source 228. All of the readers among the set of readers not equipped with a photon source 228 may use the photon source 228 of the one reader among them with a photon source 228 in order to generate a photon signal.

A stand-alone reader 112 may be utilized to perform the functionality of both the reader 112 and the control panel 104. This stand-alone reader may include, or have access to, the database that contains data used to determine the authenticity of an RFID device 116 and/or algorithm(s) used to make the determination of authenticity of the RFID device 116. A determination of authenticity for an RFID device 116 is made at the receiving point rather than having to transmit data across a network from the reader 112 to a control panel 104 in order to make a determination of authenticity. The stand-alone reader is further operable to execute instructions based upon the analysis of the RFID device 116.

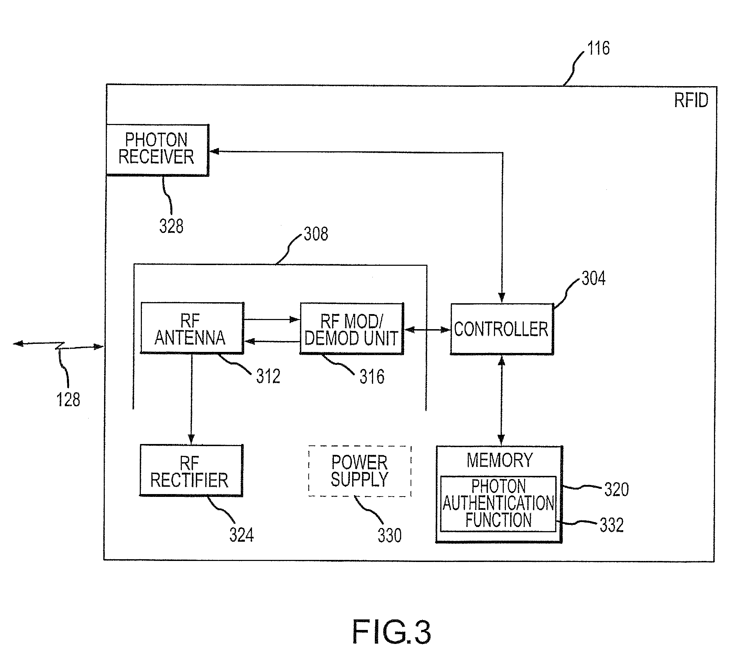

Referring now to Fig. 3 and exemplary RFID device 116 will be described in accordance with embodiments of the present invention. In the depicted embodiment, the RFID device 116 includes a controller 304, an RF send/receive unit 308 comprising an RF Antenna 312 and an MDU 316, a memory 320, an RF rectifier 324, and a light receiver 328. The RFID device 116 may also include an optional power source 330 if the RFID device requires more power than can be obtained from the RF rectifier 324.

The RF signals generated by the reader 112 inherently contain electromagnetic energy. The signals can be sent to the optional RF rectifier 324 and the energy from those signals can be converted into energy to run various components of the RFID device 116. An optional power source 224 is also available to supply power to any other component of the RFID device 116 depicted or not depicted. Additionally, energy from the light receiver 328 may be rectified and used to power the RFID device. Various schemes used to provide power to the RFID device 116 are further described in the GB Patent Application No. 2,410,151, which is herein incorporated by reference.

The controller 304 of the RFID device generally includes (e.g., a microprocessor, application specific integrated circuit (ASIC), or the like) using bi-directional interfaces to communicate with the MDU 316, the memory 320, and/or the photon receiver 328. In an alternate embodiment (not shown), portions of the MDU 216 may be incorporated in the controller 204.

The memory 220 generally comprises software routines facilitating, in operation, pre-determined functionality of the RFID device 116. The memory 320 of the RFID device 116 generally comprises at least one array of non-volatile memory cells, e.g., Erasable Programmable Read Only Memory (EPROM) cells or Flash Memory Cells, among other types of non-volatile memory cells. The memory 320 may also comprise at least one array of dynamic random access memory (DRAM) cells, in the event that the RFID device 116 includes an optional power source. Therefore a content of at least a portion of the memory 320 may be pre-programmed and write protected thereafter, whereas the content of other portions of the memory 320 may be selectively modified and/or erased by the reader 112.

The RFID device 116, according to embodiments of the present invention, is used as an identification device. The RFID 116 can be implemented as a part of an ID/access card, smart card, RF tag, cellular phone, PDA, and the like. Identification information is preferably loaded into a secure area of the memory 320 where it can be accessed by controller 304 to communicate to readers 112 via interface 128 only after an enabling photon signal has been verified. Information or data loaded on the memory 320 may include credential information of the user of the RFID device 116, for instance, unique IDs, manufacture IDs, passwords, keys, encryption schemes, transmission protocols, and the like. Additionally, the memory 320 may contain executable functions that are used by the controller 304 to run other components of the RFID device 116. An example of such an executable function would be a photon authentication function 332. Of course, the photon authentication function 332 may reside wholly or in part in the controller 304. To determine if photons received at the photon receiver 328 correspond to an authorized source, the controller 304 may execute the photon authentication function 332. Accessing a lookup table (not shown) in the memory 320 may help the controller 304 to make a verification of authenticity for a given source of light. Alternatively, mathematical/cryptographic authentication techniques may be employed. Further in the alternative, the light may be transmitted for a predetermined amount of time and when the RFID device receives the light for the predetermined amount of time (within a certain threshold of nano-seconds for example), then verification of authenticity for the source of light can be completed.

In operation, the data contents of the memory 320 are secured and are not transmitted to any other object until enabling light is received at the photon receiver 328. Specifically, all kinds of data may be maintained in a secured state in memory 320. Sensitive data may be a part of the data maintained in a secure state in the memory 320. Highly sensitive data may include, but is not limited to, bank account numbers, social security numbers, PIN codes, passwords, access codes, keys, RFID unique ID, encryption schemes, *etc.* Less sensitive data may include, but is not limited to, user name, manufacturer ID, job title, and so on. Even non-sensitive data may be maintained in a secured state in memory 320. Non-sensitive data may include the time of day, type of RFID device, and the like. The photon receiver 328 may also act as a photon transmitter and devices incorporated in the photon receiver 328 may include those noted above in relation to the photon source 228 of the reader 112. The photon receiver 328 receives a light signal and forwards the signal's contents to the controller 304. The controller 304 accesses the photon authentication function 332 in the memory 320 to determine if the source of the light signal is a "trusted" source (e.g., can be verified as authentic based on information in the memory 320). Assuming the controller 304 determines that the source of the light is a trusted source, for instance an authorized reader, the controller 304 generates a signal (e.g., RF signal or light signal) to be transmitted.

The transmitted signal may be transmitted back to the now trusted reader 112 or a reader 112 associated with the photon source 228. The signal indicates that the RFID device 116 is ready to allow the reader access to the contents of the memory 320. The transmitted signal may also be transmitted such that any reader 112 within proximity of the RFID device 116 is able to receive the signal.

In an alternative embodiment, the RFID device 116 may generate light to begin the authentication process with the reader 112. Then only after the reader 112 has determined that the RFID device 116 is authentic through a photon authentication algorithm, RF signals may be transmitted between the devices.

In an RF receiving mode, an RF signal is received at the RF antenna 312 and forwarded to the MDU 316. The MDU 316 demodulates the signal and sends it to the controller 304. Thereafter, the controller 304 processes the contents of the signal and determines what information from memory 320 should be sent back to the reader 112. The controller 304 generates a signal including contents from the memory 320 that will allow the reader 112 to verify the identity of the RFID device 116 and potentially the holder of the RFID device 116. That signal is forwarded to the MDU 316, where it is modulated according to various methods noted above. The modulated signal is passed on to the RF antenna 312 where it is transmitted to the reader 112 via interface 128. As can be appreciated, the signal may be transmitted to the reader 112 via a light signal instead of, or in combination with, sending the RF signal.

In accordance with embodiments of the present invention, the memory 320 may further comprise credential data and authenticating functions. Examples of credential data include, but are not limited to, assets the RFID device 116 has access to, times of allowed access to each asset, and other data that can help the RFID device 116 determine if it is eligible to gain access to a particular asset. The authenticating functions use the credential data to enable the RFID device 116 to make a determination of its own access rights with respect to an asset.

An RFID device 116 that determines its own access rights and permissions is typically referred to as a smart card. In operation, a "smart" RFID device 116 is presented to a reader 112. The reader 112 is associated with one or more assets and the reader 112 is the gatekeeper of those assets. The reader 112 contains information about its associated assets and usually time of day information. Upon presentation of the RFID device 116 to the reader 112, the reader 112 supplies the asset information and time of day information to the RFID device 116. The RFID device 116 then analyzes the asset information and time of day information using its credential data. The RFID device 116 then makes a determination whether it is allowed to access the given asset (e.g., whether the holder of the RFID device 116 can have access to a room behind a door, a bank account, computer files, *etc.*) If the RFID device 116 determines that it is allowed access to the particular asset, then it sends a signal back to the reader 112 indicating that validation of the RFID device 116 has been confirmed and access should be granted. Upon confirmation of validation of the RFID device 116, the reader 112 will unlock the door, access the bank account, permit access to the computer files, or perform the requisite steps to grant access to the holder of the RFID device 116. If the RFID device 116 determines that it is not allowed access to the particular asset, then it can either do nothing or send a signal back to the reader 112 indicating that validation of the RFID device 116 was not confirmed and access should not be granted. Upon the receipt of this signal, the reader 112 may perform no action, generate a message indicating that access was not granted, sound an alarm, or perform some other sort of action in accordance with denying the holder of the RFID device 116 access to the asset.

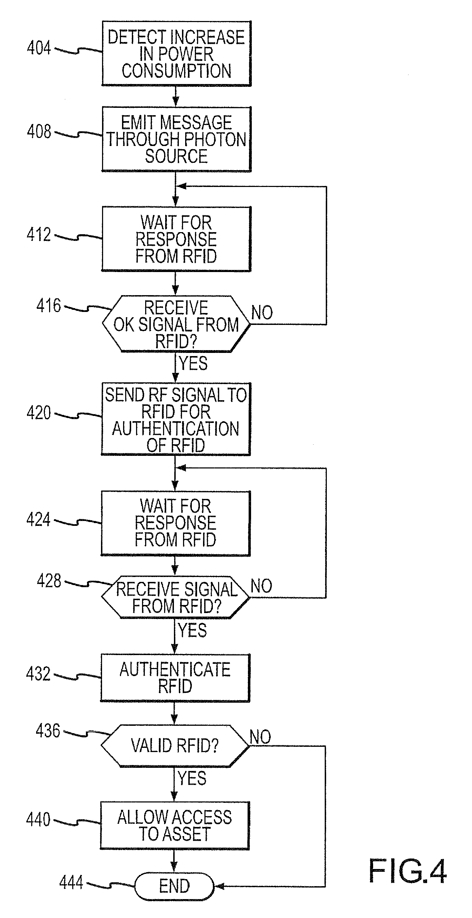

Referring now to Fig. 4, a method for sending a light signal to an RFID device 116 in order to gain access to information contained on the RFID device 116 will be described in accordance with embodiments of the present invention. In the depicted embodiment, the method starts by detecting an increase in power consumption at, for example, a reader 112. Typically, in order for a reader 112 to detect an increase in power consumption, the reader 112 must be continuously emitting an RF signal. Alternatively, the signal may be produced according to a predetermined duty cycle.

When an RFID device 116 is placed into an active zone of the reader 112, the reader 112 will be able to detect the increase in power consumption. The reader 112 then emits a message utilizing a photon source 228 whether integral to or separate from the reader 112 (step 408). The message may simply be a beam of light emitted at a particular wavelength. However, the message may also be encoded with additional data relating to the identity and access rights of the reader 112. As can be appreciated, an encoded signal may simply be sent as a series of pulses of light from the photon source 228, where the pulses correspond to some type of known code. Alternatively, a continuous photon signal may be encoded with data relating to the identity of the reader 112 using, for example, a silicon modulator as noted above.

In order to facilitate easy reception of the light signal, a platform may be provided in the area where the light signal is being emitted. A holder of the RFID device 116 can then place the RFID device 116 on the platform in order to ensure that the card is placed within the light signal path. Alternatively, the light may be emitted divergently such that an RFID device 116 may receive the light signal anywhere within the active zone of the reader 112 and a holder of the RFID device 116 only needs to position the RFID device 116 somewhere close to the reader 112. In a preferred embodiment, a line of sight is needed between the RFID device 116 and reader 112.

Once the light message has been sent, the reader 112 waits for a response from the RFID device 116 (step 412). In step 416, it is determined if the reader 112 has received a return "OK" signal from the RFID device 116. Typically the return "OK" will be in the form of an RF signal, but may also be implemented as a light signal. The OK signal is generally an authenticated message from the RFID device 116 to the reader 112. If the reader 112 has not received a return "OK" signal from the RFID device 116, then the method returns to step 412 to wait for a response. The reader 112 may also receive a message from the RFID device 116 indicating that the RFID device 116 is processing the data and the reader 112 must stand by. Additionally, the reader 112 may receive a signal from the RFID device 116 indicating that the reader 112 does not have the authority to read information from the memory of RFID device 116. If this is the case then the method returns to step 412 to wait for a different response or the process may end. If the reader 112 does receive the return "OK" signal from the RFID device 116, then the reader 112 sends an RF signal to the RFID device requesting data from the RFID device 116 (step 420). As noted above, the signal requesting data from the RFID device 116 may also be sent via a light signal from the photon source 228.

Once the reader 112 has sent the signal to the RFID device 116 requesting data, the reader 112 waits for a response from the RFID device 116 (step 424). In step 428, it is determined if the reader has received a return signal from the RFID device 116. Typically, assuming that the reader 112 and RFID device 116 are both valid and following the proper protocol, a return signal will contain the data that was requested by the reader 112. If the reader 112 does not receive this return signal in step 428, it returns to step 424 to wait for that signal. However, if the reader 112 does receive the return signal, then the reader 112 begins to verify the authenticity of the RFID device 116 by processing the data from the signal (step 432). In step 436, it is determined if the RFID device 116 is valid. If the RFID device 116 is not valid then the process end at step 444. However, if the RFID device 116 is determined to be valid, then the reader112 and/or the control panel 104 allows access to the asset that the reader 112 is associated with (step 440). Once access has been allowed to the asset the method ends in step 444.

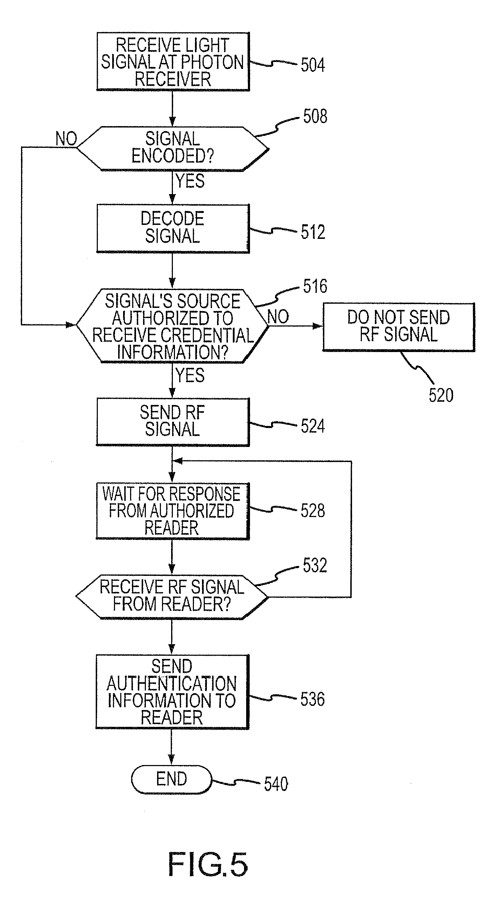

Referring now to Fig. 5, a method for validating a source of a light signal will be described in accordance with embodiments of the present invention. Initially, the RFID device 116 receives a light signal at the photon receiver 328 (step 504). As noted above, the signal may be encoded with data. In step 508, it is determined if the signal was encoded. If the signal was encoded, then the signal is decoded in step 512. The decoding can be done at the controller 304 or at the photon receiver 328.

Once the encoded signal has been decoded, the method proceeds to step 516. If the signal was not encoded, then the method bypasses step 512 and proceeds directly to step 516. In step 516, it is determined if the signal's source is authorized to receive secured data from the memory 320 of the RFID device 116. As noted above, the controller 304 utilizing the photon authentication function 332 is enabled to make this determination. A signal's source may be determined valid if it is simply emitting the proper wavelength of light. In a more secure system, the RFID device 116 may require more data from the source, for example its identity, authorization codes, passwords, and the like. If the RFID device 116 cannot authorize the signal's source then there will be no signal sent by the RFID device 116 (step 520). Step 520 may alternatively include sending a message to the signal's source informing it that source is not authorized to read data from the RFID device 116. However, if the signal's source (or a reader 112 associated with the source) is authorized to read data from the RFID device 116, then an RF signal is generated and emitted from the RFID device 116 (step 524). The RFID device 116 may also send a light signal via the photon receiver 328, which may be adapted to send and receive light signals.

Once the signal has been sent, the RFID device 116 waits for a response from a reader 112 (step 532). In step 532, it is determined if the RFID device 116 has received the signal requesting data from the RFID device 116. Typically, the signal requesting data will be sent via an RF signal. If the RFID device 116 has not yet received the signal from the authorized source, then it continues to wait at step 528. When the RFID device 116 finally receives the signal from the authorized source requesting data, the controller 304 will access the necessary parts of the memory 320 and retrieve data corresponding to the authorized source's requests. The controller 304 will generate a message containing the retrieved data and transmit it (*e.g.,* send it to the signal's source) in step 536. Then when all of the authentication information has been sent that is required, the method ends at step 540.

As a default, all of the data stored in the memory 320 is maintained in a secure state until a light signal has been received, and the identity of the source of that light signal (or a device associated with the source of the light signal) has been verified. In an alternative configuration, any reader 112 may freely access selected portions of the memory, whereas more sensitive information (*e.g.,* passwords, keys, social security numbers, etc.) may be maintained in a secure state. Additionally, based on the access authorization, one reader may be allowed access to one subset of the data stored in the memory 320, and another reader may be allowed access to a different subset of the data stored in the memory 320. The RFID device 116 can make a determination of how much data a given reader 112 is allowed to read. The determination can be based solely on the identity of the reader 112, or may simply be based upon the type of light that the reader 112 transmits.

In accordance with one embodiment of the present invention, various photon authentication techniques may be employed in a device that is separate from a credential or RFID device 116. For example, the photon authentication mechanism may reside on an electronic holder of RFID devices 116. The RFID device 116 may be inserted to the holder and the holder can restrict transmission of data on the RFID device 116 based on results of photon authentication.

The present invention, in various embodiments, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, includes providing devices and processes in the absence of items not depicted and/or described herein or in various embodiments hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Detailed Description, with each claim standing on its own as a separate preferred embodiment of the invention.

Moreover though the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A Radio Frequency Identification (RFID) device, comprising:
an antenna for communicating with radio frequency (RF) enabled devices;
a photon receiver operable to receive a photon signal;
a memory comprising data and photon source authentication information; and
a controller operable to analyze a photon signal utilizing said photon source identification information.

2. The RFID device of Claim 1, wherein said controller analyzes a photon signal to determine if a source of said photon signal is authorized to read said data.

3. The RFID device of Claim 2, wherein said data is maintained in a secured state and in response to said controller determining that said source of said photon signal is authorized to read said data, said data is transmitted by said RFID device.

4. The RFID device of Claim 3, wherein said data is transmitted by said RFID device via an RF signal.

5. The RFID device of Claim 3, wherein said data is transmitted to by said RFID device via a second photon signal.

6. The RFID device of Claim 2, wherein said data is maintained in a secured state and in response to said controller determining that said source of said photon signal is not authorized to read said data, said data is maintained in said secured state and communications are not initiated between said RFID device and said source.

7. The RFID device of Claim 2, wherein said controller analyzes the wavelength of said photon signal in order to determine whether said source is permitted access to said data.

8. The RFID device of claim 2, wherein said controller analyzes a duration that the light is transmitted in order to determine whether said source is permitted access to said data.

9. The RFID device of Claim 1, wherein said photon source identification information stored on said memory comprises a list of authorized readers and wherein said controller determines a source of said photon signal and compares said determined source against said list of authorized readers to determine if said source is an authorized reader.

10. An access control system, comprising:
a Radio Frequency Identification (RFID) device reader comprising a photon emitter and a Radio Frequency (RF) communication interface; and
an RFID device comprising a photon receiver, an RF communication interface, and a memory, wherein said memory comprises data and wherein a signal is emitted from said photon emitter and received at said photon receiver in order to verify the authenticity of said RFID device reader to said RFID device.

11. The access control system of Claim 10, wherein in response to receiving said signal at said photon receiver, said RFID device analyzes said signal to determine whether said reader is authorized to read said data.

12. The access control system of Claim 11, wherein said reader is authorized to read said data in the event that said signal comprises a wavelength and said RFID device verifies that said wavelength of said signal is within a predetermined range of acceptable wavelengths.

13. The access control system of Claim 12, wherein said predetermined range of acceptable wavelengths is between about 10 nm and about .01 cm.

14. The access control system of Claim 11, wherein in response to said RFID device determining said reader is authorized to read said data, said RFID device transmits at least a portion of said data to said reader.

15. The access control system of Claim 14, wherein said at least a portion of said data is sent to said reader by said RF communication interface of said RFID device.

16. The access control system of Claim 14,wherein said at least a portion of said data is sent to said reader via a photon signal.

17. The access control system of Claim 12, wherein said memory further comprises a list of readers authorized to read at least a portion of said data.

18. The access control system of Claim 17, wherein said RFID device analyzes said signal by determining said the identity of said reader and compares said identity against said list of readers authorized to read said data, and in response to determining that said identity of said reader resides in said list, permitting said reader to read at least a portion of said data.

19. A method for protecting data on a Radio Frequency Identification (RFID) device, comprising:
maintaining said data on said RFID device in a secured state;
receiving a photon signal;
analyzing said photon signal; and
in response to analyzing said photon signal, determining whether said photon signal is a valid photon signal.

20. The method of Claim 19, further comprising, in response to determining said photon signal is valid, releasing said data stored on said RFID device from said secured state.

21. The method of claim 20, further comprising:
generating a signal comprising at least a portion of said data; and
transmitting said signal.

22. The method of claim 21, wherein said signal is transmitted via an RF signal.

23. The method of claim 21, wherein said signal is transmitted via a photon signal.

24. The method of Claim 19, wherein said photon signal comprises a wavelength and wherein photon said signal is determined to be a valid photon signal in the event that said wavelength is between a predetermined range of acceptable wavelengths.

25. The method of Claim 19, wherein said analyzing further comprises determining a source of said photon signal and comparing said source against a list of authorized readers.

26. The method of Claim 19, further comprising, in response to determining said photon signal is not a valid signal, maintaining said data in a secured state.

27. A Radio Frequency Identification (RFID) device, comprising:
an antenna for communicating with radio frequency (RF) enabled device;
a photon receiver for receiving photon signals;
a memory comprising data and photon source identification information; and
a controller operable to analyze a photon signal utilizing said photon source identification information, wherein said controller analyzes a photon signal and determines one of the following:
a source associated with said photon signal is authorized to read said data; and
a source associated with said photon signal is not authorized to read said data.

28. The RFID device of claim 27, wherein said data is maintained in a secured state and in response to said controller determining that said source associated with said photon signal is authorized to read said data, said data is transmitted by said RFID device.

29. The RFID device of claim 28, wherein said data is transmitted by said RFID device via an RF signal.

30. The RFID device of claim 28, wherein said data is transmitted by said RFID device via a photon signal.

31. The RFID device of claim 27, wherein said data is maintained in a secured state and in response to said controller determining that said source associated with said photon signal is not authorized to read said data, said data is maintained in said secured state.

32. The RFID device of claim 27, wherein said controller analyzes the wavelength of a photon signal in order to determine whether said source associated with said photon signal is permitted to read said data.

33. The RFID device of claim 27, wherein the photon signal is modulated according to at least one of frequency, pulse width, and amplitude.
